# EUROPEAN PATENT APPLICATION

(11) **EP 4 700 593 A2**
(43) Date of publication of application: **25.02.2026**
(21) Application number: 25179412.9
(22) Date of filing: 28.05.2025
(51) Int. Cl.: G06F 16/172

(54) **FILE ACCESS METHOD, APPARTUS, MEDIUM, AND DEVICE FOR DISTRIBUTED CACHE SYSTEM**

(30) Priority: 22.08.2024 CN 202411163120
(71) Applicant: Beijing Volcano Engine Technology Co., Ltd., Beijing 100190 (CN)
(72) Inventor: SONG, Zhenhua, 8 Marina View, Level 43, Asia Square Tower 1 (SG)
(74) Representative: Grünecker Patent- und Rechtsanwälte PartG mbB

(57) **Abstract**

A file access method for a distributed cache system, an apparatus, a medium, and a device are provided. The method includes: reading metadata information of a target file from a first service node of the target file in response to an access request for the target file, wherein the metadata information is used to indicate a cache path of the target file, the first service node of the target file is any client node in the distributed cache system, a plurality of client nodes in the distributed cache system are respectively used as first service nodes of different files, and one first service node is used to maintain metadata information of at least one file; and accessing a second service node which is used to cache the target file according to the metadata information, and reading the target file from the second service node, wherein the second service node is any client node in the distributed cache system. In this way, it is possible to avoid centrally maintaining the metadata information of all files on the metadata server, but to disperse and store the metadata information of different files in different first service nodes, thereby avoiding the metadata server from becoming a performance bottleneck of the distributed cache system.

## Description

### TECHNICAL FIELD

The present disclosure relates to the field of computer technologies, and in particular, to a file access method for a distributed cache system, an apparatus, a medium, and a device.

### BACKGROUND

For a distributed cache system, a tree structure or a centralized structure may generally be used. In the tree structure, all nodes need to request a file through a root node and a child node adjacent to the root node of the tree structure, which causes the root node and the child node adjacent to the root node to become a performance bottleneck of the distributed cache system. Moreover, each node also needs to cache file data as much as possible, which causes a large cache pressure on the node. In the centralized structure, a metadata server is required to maintain metadata information about which node each file is cached in. When a cache is newly added or evicted, each node needs to synchronize update information to the metadata server, resulting in an increase in the load of the metadata server. Moreover, each node needs to access the metadata server first when accessing a file, which results in an increase in the number of network requests and an increase in the delay of file reading.

Therefore, whether the distributed cache system adopts the tree structure or the centralized structure, it will have different disadvantages, and there is an urgent need to design a different file access method.

### SUMMARY

Embodiments of the present disclosure provide a file access method for a distributed cache system, comprising: reading metadata information of a target file from a first service node of the target file in response to an access request for the target file, wherein the metadata information is used to indicate a cache path of the target file, the first service node of the target file is any client node in the distributed cache system, a plurality of client nodes in the distributed cache system are respectively used as first service nodes of different files, and one first service node is used to maintain metadata information of at least one file; and accessing a second service node which is used to cache the target file according to the metadata information, and reading the target file from the second service node, wherein the second service node is any client node in the distributed cache system.

In at least one embodiment, the target file is divided into a plurality of segments of segmented data, the plurality of segments of segmented data are dispersedly cached in a plurality of second service nodes, and the metadata information is used to indicate a cache path corresponding to each of the plurality of segments of segmented data; and the accessing a second service node which is used to cache the target file according to the metadata information, and reading the target file from the second service node comprises: accessing the second service node which is used to cache a segment of segmented data of the target file according to the metadata information, and reading the corresponding segmented data from the second service node.

In at least one embodiment, the reading metadata information of a target file from a first service node of the target file in response to an access request for the target file comprises: acquiring node information of the first service node of the target file from a metadata server of the distributed cache system in response to a first access request for the target file, wherein the metadata server is configured to maintain client nodes that access the target file, determine the first service node corresponding to the target file from the maintained client nodes, and send the node information of the first service node to the maintained client nodes; and accessing the first service node according to the node information, and reading the metadata information of the target file from the first service node.

In at least one embodiment, the first service node is configured to determine a third service node from client nodes when a load of the first service node is greater than a first preset threshold, and to report node information of the third service node to the metadata server, the third service node having a same work logic as the first service node; and the metadata server is configured to divert an access request for the first service node from a new client node to the third service node in response to receiving the access request for the first service node from the new client node.

In at least one embodiment, the accessing a second service node which is used to cache the target file according to the metadata information, and reading the target file from the second service node comprises: accessing the second service node which is used to cache the target file according to the metadata information, and receiving the target file sent by the second service node, wherein the second service node is configured to read the target file from a source data server of the distributed cache system when the target file is not cached, and cache the target file in the second service node and send the target file to a node that accesses the target file.

In at least one embodiment, the first service node has a backup node, the backup node has metadata information of at least one file maintained by the first service node, and the backup node is configured to take over work logic of the first service node when a node abnormality occurs in the first service node; and the method further comprises: reading the metadata information of the target file from the backup node corresponding to the first service node when the node abnormality occurs in the first service node.

In at least one embodiment, the first service node is configured to determine a third service node from the plurality of client nodes for caching a file corresponding to the second service node when a load of the second service node is greater than a second preset threshold, and to divert an access request for the second service node from a new client node to the third service node.

Embodiments of the present disclosure further provide file access apparatus for a distributed cache system, comprising: a first reading module configured to read metadata information of a target file from a first service node of the target file in response to an access request for the target file, wherein the metadata information is used to indicate a cache path of the target file, the first service node of the target file is any client node in the distributed cache system, a plurality of client nodes in the distributed cache system are respectively used as first service nodes of different files, and one first service node is used to maintain metadata information of at least one file; and a second reading module configured to access a second service node which is used to cache the target file and according to the metadata information, and reading the target file from the second service node, wherein the second service node is any client node in the distributed cache system.

Embodiments of the present disclosure further provide an electronic device, comprising: a memory storing a computer program; and a processor configured to execute the computer program in the memory, to implement the file access method for a distributed cache system according to any one above embodiment.

Embodiments of the present disclosure further provides a non-transitory computer-readable storage medium, storing a computer program which, when executed by a processor, causes the file access method for a distributed cache system according to any one above embodiment to be implemented.

### BRIEF DESCRIPTION OF THE DRAWINGS

The above and other features, advantages and aspects of various embodiments of the present disclosure will become more apparent when taken in conjunction with the drawings and with reference to the following detailed description. Throughout the drawings, the same or similar reference numbers refer to the same or similar elements. It should be understood that the drawings are schematic and that parts and elements are not necessarily drawn to scale. In the drawings:
Fig. 1 is a flowchart of a file access method for a distributed cache system according to some embodiments;
Fig. 2 is a schematic diagram of accessing a file according to some embodiments;
Fig. 3 is a schematic diagram of accessing a metadata server according to some embodiments;
Fig. 4 is a schematic structural diagram of a file access apparatus for a distributed cache system according to an exemplary embodiment; and
Fig. 5 is a schematic structural diagram of an electronic device according to an exemplary embodiment.

### DETAILED DESCRIPTION

The embodiments of the present disclosure will be described in more detail below with reference to the drawings. Although some embodiments of the present disclosure are shown in the drawings, it should be understood that the present disclosure can be implemented in various forms and should not be construed as limited to the embodiments set forth herein. Rather, these embodiments are provided for a thorough and complete understanding of the present disclosure. It should be understood that the drawings and embodiments of the present disclosure are only for illustrative purposes and are not intended to limit the scope of protection of the present disclosure.

It should be understood that various steps described in method implementations of the present disclosure may be performed in different orders and/or in parallel. In addition, the method implementations may include additional steps and/or omit performing the illustrated steps. The scope of the present disclosure is not limited in this respect.

The term "include/comprise" and variations thereof as used herein are open-ended inclusions, that is, "include/comprise but not limited to". The term "based on" is "at least partially based on". The term "one embodiment" means "at least one embodiment"; the term "another embodiment" means "at least one another embodiment"; and the term "some embodiments" means "at least some embodiments". Relevant definitions of other terms will be given in the following description.

It should be noted that concepts such as "first" and "second" mentioned in the present disclosure are only used to distinguish between different apparatuses, modules or units, and are not used to limit the order of functions performed by these apparatuses, modules or units or the interdependence between them.

It should be noted that modifications of "one" and "a plurality of" mentioned in the present disclosure are illustrative and not restrictive, and those skilled in the art should understand that they should be understood as "one or more" unless the context clearly indicates otherwise.

The names of messages or information exchanged between a plurality of apparatuses in the implementations of the present disclosure are only for illustrative purposes, and are not intended to limit the scope of these messages or information.

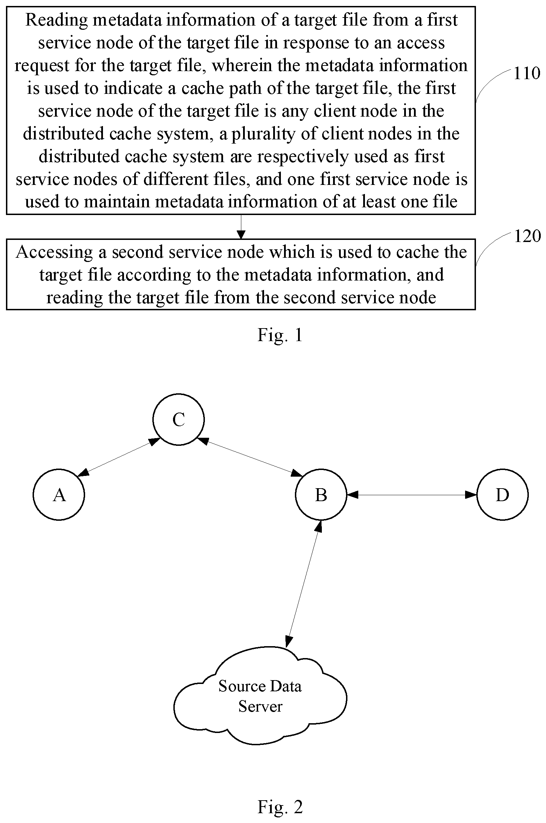

Fig. 1 is a flowchart of a file access method for a distributed cache system according to some embodiments. As shown in Fig. 1, an embodiment of the present disclosure provides a file access method for a distributed cache system, and the method may be performed by an electronic device, and specifically may be performed by a file access apparatus for a distributed cache system. The apparatus may be implemented in a software and/or hardware manner and configured in the electronic device. It should be noted that the electronic device may be a node in the distributed cache system, including but not limited to a client node. As shown in Fig. 1, the method may include the following steps.

In step 110, metadata information of a target file is read from a first service node of the target file in response to an access request for the target file, the metadata information is used to indicate a cache path of the target file, the first service node of the target file is any client node in the distributed cache system, a plurality of client nodes in the distributed cache system are respectively used as first service nodes of different files, and one first service node is used to maintain metadata information of at least one file.

Here, in the distributed cache system, each file is cached in a second service node, and the first service node is used to maintain metadata information of at least one file, that is, the first service node maintains metadata information of a file that the first service node is responsible for. That is, in the distributed cache system, all nodes with a role of the first service node are responsible for maintaining metadata information of one or more files under their responsibility, so as to disperse the metadata information of all files among the first service nodes. For example, the first service node may maintain the metadata information of the target file.

The metadata information is used to indicate a cache path of the target file, and the cache path points to the second service node where the target file is located. For example, the metadata information is used to describe which second service node or which second service nodes the file is specifically cached in. That is, in the distributed cache system, different files are maintained by the first service node and the second service node corresponding to the file.

It should be noted that the plurality of client nodes in the distributed cache system are respectively used as first service nodes of different files. That is, different files may be maintained by at least one first service node with metadata information corresponding to the files. Moreover, data corresponding to the files is cached by at least one second service node. That is, the metadata information of different files is dispersedly stored in different first service nodes in the distributed cache system, and different files are dispersedly cached in different second service nodes in the distributed cache system.

In the embodiment of the present disclosure, the first service node and the second service node may both be client nodes selected from the distributed cache system. At least one client node may be selected from the client nodes of the distributed cache system as the first service node for maintaining the metadata information of the file, and at least one client node may be selected from the client nodes of the distributed cache system as the second service node for caching the file.

It should be understood that the client node in the distributed cache system does not necessarily refer to a terminal device. There may be multiple levels/layers of nodes between the source data server and the terminal device. For each node on the entire data link, a data source node of the node is a data server of the node, and then the node may be referred to as a client node of the data server. For example, a terminal device A obtains data from an edge node B, the edge node B obtains data from a backbone node C, and the backbone node C obtains data from a data storage node D in the computer room. Correspondingly, on this link, the terminal device A is a client node of the edge node B, the edge node B is a server of the terminal device A, the edge node B is a client node of the backbone node C, the backbone node C is a server of the edge node B, the backbone node C is a client node of the data storage node D, and the data storage node D is a server of the backbone node C.

That is, the roles of the respective nodes in the distributed cache system may be different in different scenarios, which may be either a client role or a server role.

When any one node in the distributed cache system accesses the target file, the node accesses the first service node corresponding to the target file, and reads the metadata information of the target file from the first service node.

It is worth noting that, by maintaining the metadata information of the file through the first service node, it is possible to avoid the metadata server of the distributed cache system from maintaining the metadata information of all files, thereby avoiding the metadata server from becoming a performance bottleneck of the distributed cache system. Moreover, by caching different files through different second service nodes, it is also possible to avoid an excessive cache pressure on a certain node.

In step 120, a second service node which is used to cache the target file is accessed according to the metadata information, and the target file is read from the second service node.

Here, the second service node is any client node in the distributed cache system. Since the second service node is used to actually cache the target file, after the electronic device obtains the metadata information of the target file from the first service node, the electronic device accesses the second service node based on the metadata information, and reads the target file from the second service node.

In the embodiment of the present disclosure, each node in the distributed cache system, when accessing the target file, first accesses the first service node corresponding to the target file, obtains the metadata information of the target file from the first service node, and then accesses the corresponding second service node through the metadata information, and reads the target file from the cache of the second service node.

That is, when a node in the distributed cache system needs to access a file, the node first accesses the first service node corresponding to the file, and the first service node informs the node to access the second service node to read the file.

It is worth noting that when the electronic device accesses the target file for the first time, the target file may be accessed through the above steps 110 to 120. When the electronic device accesses the same target file for the second time or thereafter, since the electronic device has obtained the metadata information of the target file, the electronic device may directly perform step 120 to read the target file from the second service node, without the need to obtain the metadata information of the target file from the first service node again.

In some embodiments, in response to an access request for the target file that is not the first access request, the second service node corresponding to the metadata information is accessed according to the metadata information, and the target file is read from the second service node.

That is, when a node that is about to access a target file in the distributed cache system has known the metadata information of the target file, in a subsequent read operation for the target file, the node may directly initiate an access request to the second service node corresponding to the metadata information of the target file through the recorded metadata information of the target file, to read the target file, so that not only the number of network IO (Input/Output) requests can be reduced, but also the electronic device only needs one network IO request to read the target file in an optimal case, which greatly improves the performance of the distributed cache system.

Thus, by using a plurality of client nodes in the distributed cache system as first service nodes of different files respectively, maintaining metadata information of at least one file through the first service node, and caching the target file through the second service node, when any node accesses the target file, the metadata information of the target file is read from the first service node corresponding to the target file, and the second service node is accessed according to the metadata information, and the target file is read from the second service node, which can avoid centrally maintaining the metadata information of all files on the metadata server, and instead disperse and store the metadata information of different files in different first service nodes, thereby avoiding the metadata server from becoming a performance bottleneck of the distributed cache system. Moreover, by caching different files through different second service nodes, it is also possible to avoid an excessive cache pressure on a certain node in the distributed cache system. In addition, it is also possible to reduce the number of network IO requests and improve the performance of the distributed cache system.

In some implementable implementations, the target file is divided into a plurality of segments of segmented data, the plurality of segments of segmented data are dispersedly cached in a plurality of second service nodes, and the metadata information is used to indicate a cache path corresponding to each segment of segmented data.

Here, the first service node may divide the target file into at least one segment of segmented data logically according to a preset segmented data length. Exemplarily, the preset segmented data length may be 16 MB. That is, the target file is divided according to 16 MB as one segment of segmented data. Certainly, a value of the preset segmented data length may be set according to actual conditions, such as 20 MB.

For each segment of segmented data, the first service node arranges at least one client node in the distributed cache system as the second service node, and instructs the at least one second service node to be responsible for caching all data of the segmented data, while the first service node maintains metadata information of each segment of segmented data, so as to inform a node that accesses the file of a cache path of the segmented data required by the node.

Exemplarily, the first service node may select at least one client node from the client nodes of the distributed cache system as the second service node through a load balancing strategy. The load balancing strategy may be to select a client node with a smallest current load as the second service node or to select a client node with a largest free capacity as the second service node.

Certainly, in other examples, a client node that has been newly added and/or has a longest expected active time may be selected from the client nodes of the distributed cache system as the second service node.

It should be understood that the first service node may select at least one client node from the client nodes maintained by the first service node as the second service node. The client node maintained by the first service node may be a client node that has requested the metadata information from the first service node. When the client node requests the metadata information from the first service node, the first service node adds the client node to a node list maintained by the first service node, and the first service node may select at least one client node from the node list as the second service node for caching the segmented data, and instruct each second service node to cache its corresponding segmented data.

Therefore, each first service node only needs to maintain the metadata information of each segment of segmented data of the corresponding target file, which greatly reduces the amount of data and the complexity of the metadata that needs to be maintained. Moreover, since the second service node where each segment of segmented data is located is relatively fixed, the metadata information does not need to be updated frequently; unless the second service node that caches the segmented data fails/exits, or a new second service node is added to the first service node, the metadata information needs to be updated. In addition, since the first service node maintains the metadata information of each segment of segmented data, the first service node does not need to maintain where the variable-length data area of the file is cached, nor does it need to frequently update the metadata information maintained by the first service node with the caching of new file data or the eviction of old file data.

Since the file is divided into at least one segment of segmented data and dispersedly cached in at least one second service node, for each second service node, it only needs to cache the data of the segmented data allocated to the second service node by the first service node, without the need to cache all data of the file, thereby greatly reducing the cache pressure of each node and avoiding a waste of storage resources caused by the same file being cached on multiple client nodes.

Correspondingly, in step 120, the second service node which is used to cache the segmented data of the target file may be accessed according to the metadata information, and the corresponding segmented data is read from the second service node.

Here, the read metadata information may be metadata information of any segment of segmented data, so that the electronic device can access, through the metadata information, the second service node used to cache the segmented data of the target file, so as to read the corresponding segmented data.

For example, when any client node in the distributed cache system needs to access at least one target segment of segmented data of the target file, the client node accesses the first service node corresponding to the target file, obtains the metadata information of the target segment of segmented data, and then accesses, through the metadata information, the second service node that caches the target segment of segmented data, to read the target segment of segmented data from the second service node.

It is worth noting that the target segment of segmented data may be one segment of segmented data in the at least one segment of segmented data obtained through splitting, or may be a sub-segment in the segmented data obtained through splitting.

In some embodiments, in step 120, the second service node used to cache the target file may be accessed according to the metadata information, and the target file sent by the second service node is received.

The second service node is configured to read the target file from a source data server of the distributed cache system when the target file is not cached, and cache the target file in the second service node and send the target file to the node that accesses the target file.

It is worth noting that when the target file has been cached, the second service node directly sends the target file to the first service node. When the target file is not cached, the target file is read from the source data server, and the target file is sent to the node that reads the target file, and the target file is cached in the second service node.

Certainly, when the target file is cached in different second service nodes in the form of segmented data, the second service node is configured to send the target segment of segmented data to the node that reads the target segment of segmented data when the target segment of segmented data has been cached, to read the target segment of segmented data from the source data server when the target segment of segmented data is not cached, and send the target segment of segmented data to the node that reads the target segment of segmented data, and cache the target segment of segmented data in the second service node.

Exemplarily, the electronic device may send, to the second service node corresponding to the metadata information, an access request for reading the target segment of segmented data according to the metadata information of the target segment of segmented data, and receive the target segment of segmented data sent by the second service node in response to the access request.

The source data server is a server used to store original file data. When the target segment of segmented data under the responsibility of the second service node is not cached, the second service node performs a source returning operation to read the target segment of segmented data from the source data server. Then, the second service node returns the target segment of segmented data to the node that sends the access request, and caches the target segment of segmented data locally in the second service node.

In this situation, the second service node has cached the target segment of segmented data, and when the target segment of segmented data is read again, the second service node directly returns the target segment of segmented data to the node that reads the target segment of segmented data, without the need to read data of the target segment of segmented data from the source data server again.

It should be noted that when a second service node designated by a first service node fails or exits, the client node cannot read the target segment of segmented data from the second service node. Accordingly, the client node may query the first service node for the metadata information of the target segment of segmented data again, and the first service node may replace the second service node corresponding to the target segment of segmented data, so that the client node accesses the new second service node through the new metadata information to read the target segment of segmented data.

Thus, with the above implementations, each node in the distributed cache system no longer caches the file data it reads, but divide the file into at least one segment of segmented data, and the segmented data is cached by at least one second service node. When other nodes need to read the file, the file data is read from the second service node that caches the segmented data, which greatly reduces the pressure on the cache space of each node, and can also avoid the data of the same file from being stored in multiple nodes in the distributed cache system, thereby avoiding a waste of cache space. Moreover, by storing the file in segments, the metadata information of the file maintained by each first service node is the metadata information of each segment of segmented data, which greatly reduces the amount of data and the complexity of the metadata that needs to be maintained, thereby avoiding frequent updates of the metadata information.

Fig. 2 is a schematic diagram of accessing a file according to some embodiments. As shown in Fig. 2, it is assumed that the node C in the distributed cache system needs to read the file data of the target segment of segmented data of [20 MB, 24 MB], and the first service node A maintains the metadata information of each segment of segmented data of the target file. Assuming that the segmented data of [20 MB, 24 MB] is cached in the second service node B, the node C inquires of the first service node A about the metadata information of the segmented data of [20 MB, 24 MB], and the first service node A returns the metadata information of the segmented data of [20 MB, 24 MB] to the node C, to inform that the target segment of segmented data of [20 MB, 24 MB] is cached in the second service node B. The node C requests to read the target segment of segmented data from the second service node B according to the metadata information. If the target segment of segmented data is not cached in the second service node B, the second service node B reads the target segment of segmented data from the source data server, returns the read target segment of segmented data to the node C, and fills the target segment of segmented data into the local cache of the second service node B. Subsequently, if the node D in the distributed cache system requests to read the target segment of segmented data of [20 MB, 24 MB] from the second service node B, since the second service node B has cached the target segment of segmented data of [20 MB, 24 MB], the second service node B directly returns the target segment of segmented data to the node D. It should be noted that the node D has recorded the metadata information that the target segment of segmented data of [20 MB, 24 MB] is cached in the second service node B, and thus the node D does not need to read the metadata information from the first service node A again.

In some implementable implementations, in step 110, in response to a first access request for the target file, node information of the first service node of the target file is acquired from the metadata server of the distributed cache system, the first service node is accessed according to the node information, and the metadata information of the target file is read from the first service node.

Here, when each client node in the distributed cache system accesses the target file for the first time, it needs to access the metadata server of the distributed cache system first. The metadata server is configured to maintain the client nodes that accesses the target file, determine the first service node corresponding to the target file from the maintained client nodes, and send the node information of the first service node to the maintained client nodes.

That is, the metadata server records the node information corresponding to all client nodes that access the same file in the maintained client list, and the metadata server selects at least one client node from the maintained client list as the first service node, so that the first service node maintains the metadata information of the file. Moreover, the metadata server sends the node information of the first service node to the client nodes in the client list maintained by the metadata server, to inform all client nodes in the client list to access the file through the first service node.

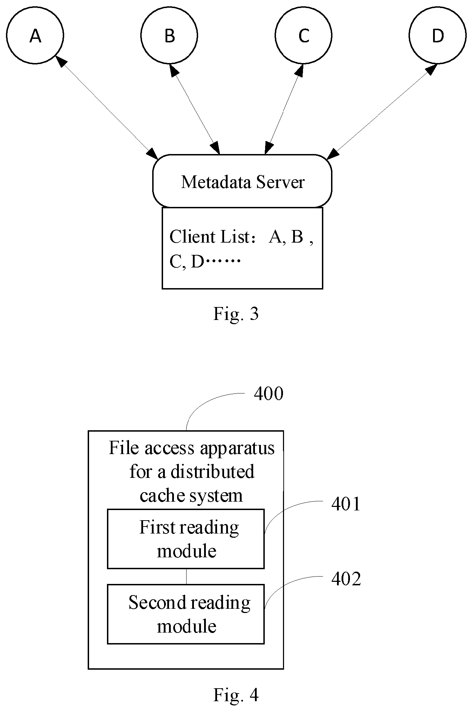

Fig. 3 is a schematic diagram of accessing a metadata server according to some embodiments. As shown in Fig. 3, it is assumed that A, B, C, and D are client nodes that access the same target file, A, B, C, and D are recorded in the client list of the metadata server, and the metadata server selects the first client node A from A, B, C, and D as the first service node corresponding to all client nodes that access the target file, and sends the node information of A to all client nodes in the client list, to notify all client nodes in the client list that the first service node corresponding to the target file is the node A. Afterwards, when the client nodes A, B, C, and D need to read the target file, they all obtain the metadata information of the target file by accessing the client node A.

When there is a new client node that accesses the target file, the new client node will also be added to the client list of the metadata server, and the metadata server notifies the new client node that the first service node corresponding to the target file is the node A, so that the new client node can obtain the metadata information of the target file by accessing the client node A.

It is worth noting that when a client node in the distributed cache system accesses the file for the first time, the client node accesses the metadata server, the metadata server records all client nodes that access the same file, and determines the first service node corresponding to the file from all the recorded client nodes.

Exemplarily, the first client node that accesses the file among all the client nodes may be used as the first service node. Then, the metadata server informs all the recorded client nodes of the node information of the first service node. When the client node needs to access the file, the client node accesses the corresponding first service node according to the node information, and obtains the metadata information of the file from the first service node. Next, the client node accesses the corresponding second service node according to the metadata information, and obtains the file from the second service node.

When the client node in the distributed cache system accesses the file not for the first time, since the client node has obtained the metadata information of the file when accessing the file for the first time, the client node may directly access the corresponding second service node through the recorded metadata information, to obtain the file from the second service node.

Thus, with the above implementations, the client node in the distributed cache system only needs to access the metadata server when reading the file data for the first time, without the need to access the metadata server every time, so that the number of network IO requests can be greatly reduced. In an optimal case, only one network IO request for accessing the file is required, so that the performance of the distributed cache system can be greatly improved.

In some implementable implementations, the first service node has a backup node, the backup node has the metadata information of at least one file maintained by the first service node, and the backup node is configured to take over the work logic of the first service node when a node abnormality occurs in the first service node. Correspondingly, when the node abnormality occurs in the first service node, the metadata information of the target file is read from the backup node corresponding to the first service node.

Here, each first service node in the distributed cache system may have at least one backup node. Exemplarily, other nodes except the first service node among all client nodes that access the same file may be used as the backup node of the first service node. For example, nodes A, B, C, and D are client nodes that access the same target file, and A serves as the first service node corresponding to all client nodes that access the target file, then one or more of B, C, and D may serve as the backup node of the first service node.

The backup node of the first service node, like the first service node, also maintains the metadata information of at least one file maintained by the first service node. Exemplarily, the first service node may synchronize the metadata information of the file maintained by the first service node to the backup node of the first service node.

When the node abnormality occurs in the first service node, the backup node of the first service node takes over the work logic of the first service node. The node abnormality may refer to that the first service node exits from the distributed cache system or the first service node fails.

In the case where the first service node exits, the first service node may designate a target backup node in the backup nodes as a successor backup node before exiting to take over the work logic of the first service node. That is, the target backup node serves as a new first service node, and afterwards, when accessing the metadata information of the file maintained by the new first service node, the client node accesses the new first service node to obtain the metadata information.

When the first service node fails, the client node maintained by the first service node may directly request the metadata information from the backup node according to the order of the backup nodes. When receiving the request, the backup node switches its role to the first service node and reports to the metadata server.

It is worth noting that the first service node or the metadata server may notify all associated client nodes of the related information about the backup node of the first service node, and when the first service node fails, the client node may directly request the metadata information from the backup node.

It should be understood that when a backup node switches to the first service node, the metadata server or the new first service node may select one client node from the maintained client nodes to upgrade to a backup node. When the first service node has no backup node, if the first service node is abnormal, the client node may request the metadata server, and the metadata server determines a new first service node.

Thus, through the backup node, when the node abnormality occurs in the first service node, the client node in the distributed cache system can also access the file through the backup node.

In some implementable implementations, the first service node is configured to determine a third service node from the client nodes when the load of the first service node is greater than a first preset threshold, and report node information of the third service node to the metadata server, the third service node having the same work logic as the first service node. The metadata server is configured to divert an access request for the first service node from a new client node to the third service node when receiving the access request for the first service node from the new client node.

Here, the load of the first service node being greater than the first preset threshold may refer to that the number of access requests received by the first service node is greater than the first preset threshold. When the load of the first service node is greater than the first preset threshold, the first service node may become a performance bottleneck of the distributed cache system. Therefore, the first service node may determine the third service node from the client nodes in the distributed cache system. The third service node has the same work logic as the first service node. That is, the third service node also maintains the metadata information of the file that is consistent with the first service node.

The first service node reports the node information of the third service node to the metadata server, and the metadata server then diverts the access request for the first service node from the new client node to the third service node according to the node information of the third service node.

Exemplarily, a client node with a load less than a third preset threshold among the client nodes of the distributed cache system may be determined as the third service node. Certainly, a client node with a smallest load among the client nodes of the distributed cache system may also be determined as the third service node. In other examples, the third service node may also be selected from the backup nodes of the first service node.

When the new client node accesses the target file for the first time, the new client node needs to access the metadata server, and the metadata server may inform the new client node of the node information of the third service node, so that the new client node accesses the third service node to obtain the corresponding metadata information, thereby implementing a divert of the access request originally for the first service node to the third service node, thereby implementing load balancing.

It should be noted that the new client node may refer to a client node corresponding to an access request for accessing the target file received by the metadata server after the third service node is determined. For example, before the third service node is determined, the client nodes A, B, and C access the metadata server to obtain the metadata information. After the third service node is determined, the client nodes D and E access the metadata server, and the client nodes D and E are new client nodes. That is, the client nodes A, B, and C read the target file by accessing the first service node, while the client nodes D and E read the target file by accessing the third service node.

Thus, with the above implementations, load balancing may be implemented in the distributed cache system, thereby avoiding a certain first service node from becoming a performance bottleneck of the distributed cache system.

In some implementable implementations, the first service node is configured to determine a fourth service node from the client nodes for caching the file corresponding to the second service node when the load of the second service node is greater than a second preset threshold, and divert an access request for the second service node from a new client node to the fourth service node.

Here, the load of the second service node being greater than the second preset threshold may refer to that the number of access requests received by the second service node is greater than the second preset threshold. When the load of the second service node is greater than the second preset threshold, the second service node may become a performance bottleneck of the distributed cache system. Therefore, the first service node may determine the fourth service node from the client nodes in the distributed cache system for caching the file corresponding to the second service node, and divert the access request for the second service node from the new client node to the fourth service node, so as to reduce the load of the second service node, thereby implementing load balancing.

Exemplarily, a client node with a load less than a fourth preset threshold among the client nodes of the distributed cache system may be determined as the fourth service node. Certainly, a client node with a smallest load among the client nodes of the distributed cache system may also be determined as the fourth service node.

It is worth noting that the determined fourth service node is configured to cache the file or the segmented data cached in the second service node. The first service node records the corresponding metadata information. When the new client node needs to access the file in charge of the first service node, the first service node sends the metadata information indicating that the file is cached in the fourth service node to the new client node, so that the new client node accesses the fourth service node through the metadata information to read the file.

It should be noted that the new client node refers to a client node corresponding to an access request initiated by a different client node and received by the first service node after the fourth service node is determined. For example, before the fourth service node is determined, the client nodes A, B, and C access the first service node, and after the fourth service node is determined, the client nodes A, D, and E access the first service node, then the client nodes D and E are new client nodes. That is, the client nodes A, B, and C read the file by accessing the second service node, while the client nodes D and E read the file by accessing the fourth service node.

Thus, with the above implementations, load balancing may be implemented in the distributed cache system, thereby avoiding a certain second service node from becoming a performance bottleneck of the distributed cache system.

In the embodiment of the present disclosure, a distributed cache system is provided, and the distributed cache system includes: a first service node configured to maintain metadata information of at least one file, the metadata information being used to indicate a cache path of the target file, the first service node of the target file being any client node in the distributed cache system, and a plurality of client nodes in the distributed cache system being respectively used as first service nodes of different files; a second service node configured to cache the target file, the second service node being any client node in the distributed cache system; and a client node configured to read the metadata information of the target file from the first service node of the target file in response to an access request for the target file, access the second service node used to cache the target file according to the metadata information, and read the target file from the second service node.

Optionally, the target file is divided into a plurality of segments of segmented data, the plurality of segments of segmented data are dispersedly cached in a plurality of second service nodes, and the metadata information is used to indicate a cache path corresponding to each segment of segmented data; and the client node is configured to access the second service node used to cache the segmented data of the target file according to the metadata information, and read the corresponding segmented data from the second service node.

Optionally, the distributed cache system further includes a metadata server, configured to maintain the client node that accesses the target file, determine the first service node corresponding to the target file from the maintained client node, and send the node information of the first service node to the maintained client node; and the client node is configured to: acquire the node information of the first service node of the target file from the metadata server of the distributed cache system in response to a first access request for the target file; and access the first service node according to the node information, and read the metadata information of the target file from the first service node.

Optionally, the first service node is configured to determine a third service node from the client nodes when the load of the first service node is greater than a first preset threshold, and report node information of the third service node to the metadata server, the third service node having the same work logic as the first service node; and the metadata server is configured to divert an access request for the first service node from a new client node to the third service node when receiving the access request for the first service node from the new client node.

Optionally, the second service node is configured to read the target file from a source data server of the distributed cache system when the target file is not cached, and cache the target file in the second service node and send the target file to the node that accesses the target file.

The client node is configured to access the second service node used to cache the target file according to the metadata information, and receive the target file sent by the second service node.

Optionally, the first service node has a backup node, the backup node has the metadata information of at least one file maintained by the first service node, and the backup node is configured to take over the work logic of the first service node when a node abnormality occurs in the first service node; and the client node is configured to read the metadata information of the target file from the backup node corresponding to the first service node when the node abnormality occurs in the first service node.

Optionally, the first service node is configured to determine a fourth service node from the client nodes for caching the file corresponding to the second service node when the load of the second service node is greater than a second preset threshold, and divert an access request for the second service node from a new client node to the fourth service node.

Fig. 4 is a schematic structural diagram of a file access apparatus for a distributed cache system according to an exemplary embodiment. As shown in Fig. 4, an embodiment of the present disclosure provides a file access apparatus 400 for a distributed cache system, and the file access apparatus 400 for the distributed cache system includes: a first reading module 401 configured to read metadata information of a target file from a first service node of the target file in response to an access request for the target file, the metadata information being used to indicate a cache path of the target file, the first service node of the target file being any client node in the distributed cache system, a plurality of client nodes in the distributed cache system being respectively used as first service nodes of different files, and one first service node being used to maintain metadata information of at least one file; and a second reading module 402 configured to access a second service node used to cache the target file according to the metadata information, and read the target file from the second service node, the second service node being any client node in the distributed cache system.

Optionally, the target file is divided into a plurality of segments of segmented data, the plurality of segments of segmented data are dispersedly cached in a plurality of second service nodes, and the metadata information is used to indicate a cache path corresponding to each segment of segmented data; and the second reading module 402 is further configured to: access a second service node used to cache the segmented data of the target file according to the metadata information, and read the corresponding segmented data from the second service node.

Optionally, the first reading module 401 is further configured to: acquire node information of the first service node of the target file from the metadata server of the distributed cache system in response to a first access request for the target file, the metadata server being used to maintain the client node that accesses the target file, determine the first service node corresponding to the target file from the maintained client node, and send the node information of the first service node to the maintained client node; and access the first service node according to the node information, and read the metadata information of the target file from the first service node.

Optionally, the first service node is configured to determine a third service node from the client nodes when the load of the first service node is greater than a first preset threshold, and report node information of the third service node to the metadata server, the third service node having the same work logic as the first service node; and the metadata server is configured to divert an access request for the first service node from a new client node to the third service node when receiving the access request for the first service node from the new client node.

Optionally, the second reading module 402 is further configured to: access the second service node used to cache the target file according to the metadata information, and receive the target file sent by the second service node, the second service node being configured to read the target file from the source data server of the distributed cache system when the target file is not cached, and cache the target file in the second service node and send the target file to the node that accesses the target file.

Optionally, the first service node has a backup node, the backup node has the metadata information of at least one file maintained by the first service node, and the backup node is configured to take over the work logic of the first service node when a node abnormality occurs in the first service node; and the file access apparatus 400 for the distributed cache system further includes: a third reading module configured to read the metadata information of the target file from the backup node corresponding to the first service node when the node abnormality occurs in the first service node.

Optionally, the first service node is configured to determine a fourth service node from the client nodes for caching the file corresponding to the second service node when the load of the second service node is greater than a second preset threshold, and divert an access request for the second service node from a new client node to the fourth service node.

For the logic of the method performed by each functional module in the above file access apparatus 400 for the distributed cache system, reference may be made to the part of the method related to the above embodiments, which will not be repeated here.

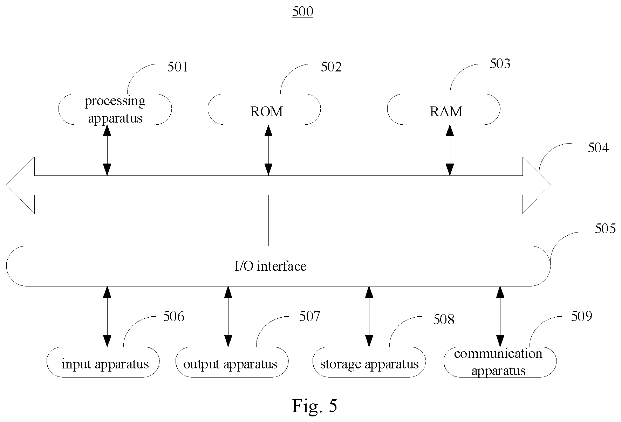

Reference is made to Fig. 5 below, which illustrates a schematic structural diagram of an electronic device 500 (such as a client node in a distributed file system, and the client node may be a terminal device) suitable for implementing the embodiments of the present disclosure. The terminal device in the embodiment of the present disclosure may include, but is not limited to, a mobile terminal such as a mobile phone, a laptop, a digital broadcast receiver, a personal digital assistant (PDA), a tablet, a portable multimedia player (PMP), an in-vehicle terminal (such as an in-vehicle navigation terminal), etc., and a stationary terminal such as a digital TV, a desktop computer, etc. The electronic device shown in Fig. 5 is only an example, and should not impose any limitation to the function and scope of use of the embodiments of the present disclosure.

As shown in Fig. 5, the electronic device 500 may include a processing apparatus 501 (such as a central processing unit, a graphics processing unit, etc.), which can perform various suitable actions and processes according to a program stored in a read-only memory (ROM) 502 or a program loaded from a storage apparatus 508 into a random access memory (RAM) 503. The RAM 503 further stores various programs and data required for the operation of the electronic device 500. The processing apparatus 501, the ROM 502, and the RAM 503 are connected to each other through a bus 504. An input/output (I/O) interface 505 is also connected to the bus 504.

Generally, the following apparatuses may be connected to the I/O interface 505: an input apparatus 506 including, for example, a touchscreen, a touchpad, a keyboard, a mouse, a camera, a microphone, an accelerometer, a gyroscope, etc.; an output apparatus 507 including, for example, a liquid crystal display (LCD), a speaker, a vibrator, etc.; a storage apparatus 508 including, for example, a magnetic tape, a hard disk, etc.; and a communication apparatus 509. The communication apparatus 509 may allow the electronic device 500 to perform wireless or wired communication with other devices to exchange data. While Fig. 5 shows the electronic device 500 having various apparatuses, it should be understood that not all of the illustrated apparatuses are required to be implemented or provided. Alternatively, more or fewer apparatuses may be implemented or provided.

Particularly, according to the embodiments of the present disclosure, the processes described above with reference to the flowcharts may be implemented as computer software programs. For example, an embodiment of the present disclosure includes a computer program product, which includes a computer program carried on a non-transitory computer-readable medium. The computer program includes program codes for executing the methods illustrated in the flowcharts. In such an embodiment, the computer program may be downloaded and installed from a network via the communication apparatus 509, or installed from the storage apparatus 508, or installed from the ROM 502. When the computer program is executed by the processing apparatus 501, the above-mentioned functions defined in the methods of the embodiments of the present disclosure are executed.

It should be noted that the above-mentioned computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated in baseband or as part of a carrier wave, in which computer-readable program codes are carried. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus, or device. The program codes contained on the computer-readable medium may be transmitted by any suitable medium, including but not limited to an electrical wire, an optical fiber cable, radio frequency (RF), etc., or any suitable combination thereof.

In some implementations, the respective nodes in the distributed cache system may communicate using any currently known or future-developed network protocol such as HTTP (HyperText Transfer Protocol), and may be interconnected with digital data communication (e.g., a communication network) in any form or medium. Examples of the communication network include a local area network ("LAN"), a wide area network ("WAN"), an internetwork (e.g., the Internet), and a peer-to-peer network (e.g., an ad hoc peer-to-peer network), as well as any currently known or future-developed network.

The above-mentioned computer-readable medium may be included in the above-mentioned electronic device, or may exist alone without being assembled into the electronic device.

The above-mentioned computer-readable medium carries one or more programs, and when the above-mentioned one or more programs are executed by the electronic device, the electronic device is caused to: read metadata information of a target file from a first service node of the target file in response to an access request for the target file, the metadata information being used to indicate a cache path of the target file, the first service node of the target file being any client node in the distributed cache system, a plurality of client nodes in the distributed cache system being respectively used as first service nodes of different files, and one first service node being used to maintain metadata information of at least one file; and access a second service node used to cache the target file according to the metadata information, and read the target file from the second service node, the second service node being any client node in the distributed cache system.

The computer program codes for executing the operations of the present disclosure may be written in one or more programming languages or a combination thereof. The above-mentioned programming languages include but are not limited to object-oriented programming languages such as Java, Smalltalk, C++, and also include conventional procedural programming languages such as "C" language or similar programming languages. The program codes may be executed entirely on a user's computer, partly on a user's computer, as a stand-alone software package, partly on a user's computer and partly on a remote computer, or entirely on a remote computer or server. In the scenario involving the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowchart or block diagram may represent a module, a program segment, or a portion of codes, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a special purpose hardware-based system that performs the specified functions or operations, or may also be implemented by a combination of special purpose hardware and computer instructions.

The modules involved in the embodiments described in the present disclosure may be implemented in software or hardware. The names of the modules do not constitute a limitation to the modules themselves under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

The above description is only preferred embodiments of the present disclosure and an illustration of the applied technical principles. It should be understood by those skilled in the art that the scope of disclosure involved in the present disclosure is not limited to the technical solutions formed by the specific combination of the above-mentioned technical features, and should also cover other technical solutions formed by any combination of the above-mentioned technical features or equivalent features thereof without departing from the above-mentioned disclosed concept, for example, a technical solution formed by replacing the above-mentioned features with technical features with similar functions disclosed in the present disclosure (but not limited to).

Additionally, although operations are depicted in a particular order, this should not be understood as requiring that such operations be performed in the particular order shown or in a sequential order. Under certain circumstances, multitasking and parallel processing may be advantageous. Likewise, although the above discussion contains several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments individually or in any suitable sub-combination.

Although the subject matter has been described in language specific to structural features and/or logical actions of methods, it should be understood that the subject matter defined in the appended claims is not necessarily limited to the specific features or actions described above. Rather, the specific features and actions described above are merely example forms of implementing the claims. Regarding the apparatus in the above embodiments, the specific manner in which the individual modules perform operations has been described in detail in the embodiments related to the method, and will not be described in detail here.

## Claims

1. A file access method for a distributed cache system, comprising:
reading metadata information of a target file from a first service node of the target file in response to an access request for the target file, wherein the metadata information is used to indicate a cache path of the target file, the first service node of the target file is any client node in the distributed cache system, a plurality of client nodes in the distributed cache system are respectively used as first service nodes of different files, and one first service node is used to maintain metadata information of at least one file; and
accessing a second service node which is used to cache the target file and according to the metadata information, and reading the target file from the second service node, wherein the second service node is any client node in the distributed cache system.

2. The file access method according to claim **1,** wherein the target file is divided into a plurality of segments of segmented data, the plurality of segments of segmented data are dispersedly cached in a plurality of second service nodes, and the metadata information is used to indicate a cache path corresponding to each of the plurality of segments of segmented data; and
the accessing a second service node which is used to cache the target file according to the metadata information, and reading the target file from the second service node comprises:
accessing the second service node which is used to cache a segment of segmented data of the target file according to the metadata information, and reading the segment of segmented data from the second service node.

3. The file access method according to claim 1 or 2, wherein the reading metadata information of a target file from a first service node of the target file in response to an access request for the target file comprises:
acquiring node information of the first service node of the target file from a metadata server of the distributed cache system in response to a first access request for the target file, wherein the metadata server is configured to maintain client nodes that access the target file, determine the first service node corresponding to the target file from the maintained client nodes, and send the node information of the first service node to the maintained client nodes; and
accessing the first service node according to the node information, and reading the metadata information of the target file from the first service node.

4. The file access method according to claim 3, wherein the first service node is configured to determine a third service node from client nodes when a load of the first service node is greater than a first preset threshold, and to report node information of the third service node to the metadata server, the third service node having a same work logic as the first service node; and
the metadata server is configured to divert an access request for the first service node from a new client node to the third service node in response to receiving the access request for the first service node from the new client node.

5. The file access method according to any one claims 1-4, wherein the accessing a second service node which is used to cache the target file according to the metadata information, and reading the target file from the second service node comprises:
accessing the second service node which is used to cache the target file according to the metadata information, and receiving the target file sent by the second service node, wherein the second service node is configured to read the target file from a source data server of the distributed cache system when the target file is not cached, and cache the target file in the second service node and send the target file to a node that accesses the target file.

6. The file access method according to any one of claims 1-5, wherein the first service node has a backup node, the backup node has metadata information of at least one file maintained by the first service node, and the backup node is configured to take over work logic of the first service node when a node abnormality occurs in the first service node; and
the file access method further comprises:
reading the metadata information of the target file from the backup node corresponding to the first service node when the node abnormality occurs in the first service node.

7. The file access method according to any one of claims 1-6, wherein the first service node is configured to determine a fourth service node from the plurality of client nodes for caching a file corresponding to the second service node when a load of the second service node is greater than a second preset threshold, and to divert an access request for the second service node from a new client node to the fourth service node.

8. A file access apparatus for a distributed cache system, comprising:
a first reading module configured to read metadata information of a target file from a first service node of the target file in response to an access request for the target file, wherein the metadata information is used to indicate a cache path of the target file, the first service node of the target file is any client node in the distributed cache system, a plurality of client nodes in the distributed cache system are respectively used as first service nodes of different files, and one first service node is used to maintain metadata information of at least one file; and
a second reading module configured to access a second service node which is used to cache the target file and according to the metadata information, and reading the target file from the second service node, wherein the second service node is any client node in the distributed cache system.

9. A non-transitory computer-readable medium storing a computer program which, when executed by at least one processor, causes the file access method for the distributed cache system according to any one of claims 1-7 to be implemented.

10. An electronic device, comprising:
a memory storing a computer program; and
a processor configured to execute the computer program in the memory, to implement the file access method for the distributed cache system according to any one of claims 1-7.
